# EUROPÄISCHE PATENTSCHRIFT

(11) **EP 1 646 556 B1**
(45) Veröffentlichungstag und Bekanntmachung des Hinweises auf die Patenterteilung: **27.06.2007**
(21) Anmeldenummer: 04763268.2
(22) Anmeldetag: 15.07.2004
(51) Int. Cl.: B64C 1/20, B64C 1/22, B64C 1/00, B64D 9/00

(54) **FRACHTDECK ZUR AUFNAHME VON LADUNG IM FRACHTRAUM EINES FLUGZEUGS**
CARGO DECK FOR RECEIVING A LOAD IN THE CARGO HOLD OF AN AIRCRAFT
PLATE-FORME DE TRANSPORT DE MARCHANDISES DESTINEE A RECEVOIR LE CHARGEMENT A L'INTERIEUR DE L'ESPACE DE TRANSPORT DE MARCHANDISES D'UN AVION

(30) Priorität: 18.07.2003 DE 10332798; 27.08.2003 DE 10339507; 27.08.2003 DE 10339508; 08.03.2004 DE 102004011163; 08.03.2004 DE 102004011164
(43) Veröffentlichungstag der Anmeldung: 19.04.2006
(73) Patentinhaber: Telair International GmbH, 83714 Miesbach (DE)
(72) Erfinder: HUBER, Thomas, 83727 Schliersee (DE); HOLZNER, Richard, 83026 Rosenheim (DE)
(74) Vertreter: Bohnenberger, Johannes
(86) Internationale Anmeldenummer: PCT/EP2004/007919
(87) Internationale Veröffentlichungsnummer: WO 2005/012082

(56) Entgegenhaltungen:
- DE-A- 2 162 042
- DE-U- 20 122 116
- US-A- 3 381 921
- US-A- 3 612 316

## Beschreibung

Die Erfindung betrifft ein Frachtdeck zur Aufnahme von Ladung im Frachtraum eines Flugzeugs nach dem Oberbegriff des Patentanspruches 1.

Aus der DE AS 21 62 042 ist ein derartiges Frachtdeck bekannt, bei welchem im Bereich einer Laderaumtür eine Vielzahl von Kugelmatten, PDUs und derlei Funktionselementen einen ersten Abschnitt des Frachtdecks bilden. An diesen Eingangsbereich schließt sich eine Vielzahl von Bodenpaneelen an, zwischen bzw. auf denen Rollenbahnen, Riegelelemente und weitere PDUs angeordnet sind, so dass Frachtstücke, z.B. Container zur Frachtraumtür hinein und dann in einer Längsrichtung des Flugzeugs an ihre endgültige Stauposition gefahren werden können. In den Staupositionen werden die Container mittels Riegelelementen verankert.

Beim Beschleunigen und Abbremsen des Flugzeugs werden über die Ladung große Kräfte auf die Riegelelemente übertragen. Ähnliches gilt schon beim Be- und Entladen, da die Container auch dort beschleunigt und abgebremst werden müssen.

Es ist nun bekannt, zum Auffangen dieser Längskräfte einen oder mehrere Querträger vorzusehen, welche das gesamte Frachtdeck überspannen und an denen die Profilelemente befestigt sind, an welchen die PDUs sowie die Riegelelemente verankert sind, welche die Längskräfte aufnehmen bzw. erzeugen. Gleiches gilt für Paneele, in welchen PDUs (oder weitere Riegelelemente) montiert sind. Diese Querträger nehmen über ihre gesamte Breite hin die genannten Längskräfte auf und leiten sie in die Außenhaut ab. Im Bereich der Frachtraumtür sind zur Aufnahme der Kräfte weiterhin gesonderte, tischartige Aufbauten bekannt, auf welchen die genannten Kugelmatten sitzen und die Funktionselemente stabil montiert sind.

Der Aufbau und die Montage eines derartigen Frachtdecks sind ausgesprochen aufwändig. Die gesamte Anordnung weist zur Erzielung einer hinreichenden Stabilität ein sehr hohes Gewicht auf.

Aus der DE 2 162 042 A, die alle Merkmale des Oberbegriffs des Anspruchs 1 offentbart, sowie der US-A-3 612 316 sind Flugzeuge mit Frachtdecks bekannt, welche den Frachtraum über seine gesamte Breite überspannen. Details der Konstruktionen sind den Druckschriften nicht entnehmbar.

Der Erfindung liegt die Aufgabe zu Grunde, ein Frachtdeck der eingangs genannten Art dahin gehend aufzuzeigen, dass bei einem vereinfachten Aufbau eine vereinfachte Montage bei geringem Gewicht und hoher Stabilität der Gesamtanordnung erzielbar ist.

Diese Aufgabe wird bei einem Frachtdeck zur Aufnahme von Ladung im Frachtraum eines Flugzeugs, umfassend eine Vielzahl von Kugelmatten, Bodenpaneelen oder dergleichen flächigen Bodenelementen, eine Vielzahl von Rollenbahnen oder dergleichen in Längsrichtung des Flugzeugs montierten Profilelementen zur Aufnahme von Transportrollen, PDUs, Riegelelementen oder dergleichen Funktionselementen zum Bewegen und Fixieren der Ladung auf dem Frachtdeck dadurch gelöst, dass die Bodenelemente mindestens abschnittsweise mit den Profilelementen derart fest zu einem, den Frachtraum über seine gesamte Breite überspannenden Deckabschnitt verbunden sind, dass auf den Deckabschnitt insbesondere durch Ladung aufgebrachte Längskräfte in Richtung einer Flugzeuglängsachse als Scherkräfte in Oberflächenrichtung des Frachtdecks wirkend zu Außenrändern des Deckabschnittes übertragbar und von den Außenrändern auf eine Außenhaut des Flugzeugs ableitbar sind, wobei das Frachtdeck in Richtung seiner Längsachse in mehrere Deckabschnitte unterteilt ist, die voneinander in Bezug auf die Längskräfte entkoppelt sind.

Ein wesentlicher Gedanke der Erfindung besteht darin, dass die ohnehin vorhandenen flächigen Elemente, nämlich die Floorpanels, also die begehbaren Paneele und/oder die Kugelmatten zusammen mit den ebenfalls ohnehin vorhandenen Profilelementen, in denen die Rollen zur Bildung von Rollenbahnen sowie die Riegelelemente und PDUs montiert sind, also Bauteile, welche zunächst zur Aufnahme von vertikalen Lasten gedacht sind, nun insgesamt zu einem gegenüber (in Oberflächenrichtung wirkenden) Scherkräften stabilen bzw. steifen Gesamtbauteil verbunden werden, das aufgrund dieser Scherkraft-Steifigkeit in der Lage ist, über die gesamte Fläche eingetragene Längskräfte an die Außenränder des Deckabschnitts weiterzugeben, von wo aus dann eine Einleitung dieser Längskräfte in die Außenhaut des Flugzeugs ermöglicht wird. Dadurch gelingt es, die bisher notwendigen und zum Auffangen dieser Kräfte aufwändig gestalteten Querträger zu ersparen. Durch die Unterteilung können die Längskräfte abschnittsweise aufgefangen und in die Außenhaut des Flugzeugs übertragen werden. Darüber hinaus können bei einer derartigen Konstruktion Längenänderungen der Deckabschnitte gegenüber dem Flugzeugrumpf durch entsprechendes Spiel zwischen den Deckabschnitten leicht aufgefangen werden.

Vorzugsweise sind Zwischenelemente vorgesehen, die einerseits mit den Außenrändern des jeweiligen Deckabschnittes und andererseits an der Außenhaut zur Übertragung der Längskräfte befestigt sind. Derartige Zwischenelemente sind in relativ einfacher Weise vor der Montage der Deckabschnitte an der Außenhaut befestigbar und können dann bei Montage der Deckabschnitte in einfacher Weise mit diesen verbunden werden. Vorzugsweise sind hierbei diese Zwischenelemente zwischen Spanten an der Außenhaut befestigt, so dass die Spanten im Wesentlichen frei von Längskräften bleiben.

Die Zwischenelemente weisen vorzugsweise eine derartig kraftrichtungsabhängige Steifigkeit auf, dass Längskräfte stärker als Kräfte in anderen Richtungen übertragen werden. Auf diese Weise ist sichergestellt, dass praktisch keine Kräfte senkrecht zur Außenhaut in diese eingeleitet werden.

Die Zwischenelemente können im Wesentlichen direkt an den Außenrändern der Deckabschnitte befestigt sein. Es ist jedoch auch möglich, diese Befestigung über zwischengeschaltete Bauteile vorzunehmen. Dies wäre beispielsweise dann der Fall, wenn die Deckabschnitte weiterhin senkrecht zur Längsachse wirkende Kräfte aufnehmende Querträger zur Bildung von tragkräftigen Modulen umfassen, wobei dann die Deckabschnitte über die Querträger an den Zwischenelementen befestigt sein können. Derartige Module sind besonders einfach montierbar.

Die Zwischenelemente sind vorzugsweise im Bereich von Endecken der Deckabschnitte angebracht und kurz ausgebildet im Vergleich zur Gesamtlänge der Deckabschnitte. Somit ist der Aufwand zum Verbinden der Zwischenelemente mit der Außenhaut des Flugzeugs wenig aufwändig. Vorzugsweise werden hierbei an jedem Deckabschnitt zwei Zwischenelemente an den Endecken eines zur Längsrichtung senkrecht verlaufenden Randes des Deckabschnittes angebracht. Dies vereinfacht nicht nur den Aufbau, es stellt vielmehr diese Konstruktion auch sicher, dass Längenänderungen der Deckabschnitte gegenüber der Außenhaut des Flugzeugs keine Spannungen zwischen diesen beiden Teilen erzeugen können.

Die oben bereits erwähnte Maßnahme, die Deckabschnitte mit Querträgern zur Bildung von Modulen auszubilden, erhöht deren Tragkraft. Die Querträger wiederum weisen vorzugsweise Stützfüße zur Befestigung an den Spanten auf, so dass Vertikalkräfte auf Spanten abgeleitet werden können.

Vorzugsweise weist jeder Deckabschnitt einen Querträger auf, dessen Enden zur Übertragung von Längskräften mit der Außenhaut verbunden sind. In diesem Fall wird also einer der Querträger so ausgebildet, dass seine Enden die oben erwähnten Zwischenelemente bilden.

Vorzugsweise sind die Deckabschnitte randseitig auf Längsträgern zum Ableiten von Kräften senkrecht zur Flugzeuglängsachse befestigt, wobei die Längsträger wiederum an den Spanten des Flugzeugs befestigt sind. Diese Anordnung erleichtert die Montage der Deckabschnitte erheblich. Eine weitere Erleichterung der Montage ergibt sich dadurch, dass die Module bzw. Deckabschnitte über Schnellverschlüsse oder dergleichen leicht zu schließende und wieder zu lösende Verbindungen im Flugzeug befestigt sind.

Nachfolgend werden bevorzugte Ausführungsformen der Erfindung anhand von Abbildungen näher erläutert. Hierbei zeigen
- Fig. 1 eine perspektivische Ansicht eines Rumpfabschnittes eines Flugzeugs,
- Fig. 2 eine perspektivische Ansicht eines Frachtladeraums mit teilmontierten Deckabschnitten,
- Fig. 3 und 4 perspektivische Ansichten zur Montage von Profilelementen an Querträgern,
- Fig. 5 eine perspektivische Ansicht eines Bodenmoduls von oben,
- Fig. 6 das Bodenmodul nach Fig. 5 in perspektivischer Ansicht von unten,
- Fig. 7 eine perspektivische Abschnittsdarstellung der Montage eines Querträgers im Flugzeug,
- Fig. 8 und 9 perspektivische Darstellungen aus verschiedenen Blickrichtungen auf Profilelemente und Zwischenelemente,
- Fig. 10 die Anordnung nach den Fig. 8 und 9 in einer teilgeschnittenen Vorderansicht und
- Fig. 11 - 13 Ansichten entsprechend denen nach den Fig. 8 - 10 auf eine zweite Ausführungsform von Zwischenelementen,
- Fig. 14 eine perspektivische Darstellung zur Erläuterung der Befestigung der Querträger an der Außenhaut,
- Fig. 15 eine perspektivische Darstellung ähnlich der nach Fig. 14 jedoch aus einem anderen Blickwinkel,
- Fig. 16 eine Frontansicht der Ausführungsform nach den Fig. 14 und 15,
- Fig. 17 eine Detailansicht des Ausschnittes XXIV aus Fig. 16,
- Fig. 18 eine Detailansicht des Ausschnittes XXV aus Fig. 16,
- Fig. 19 eine perspektivische Detaildarstellung des Abschnittes XXVI aus Fig. 15,
- Fig. 20 eine Detailansicht des Ausschnittes XXVII aus Fig. 15,
- Fig. 21 - 27 Darstellungen entsprechend denen nach den Fig. 14 - 20 jedoch einer weiteren Ausführungsform der Erfindung und
- Fig. 28 - 34 eine Darstellung entsprechend denen nach den Fig. 14 - 20 bzw. 21 - 27 jedoch noch einer weiteren Ausführungsform der Erfindung.

In der nachfolgenden Beschreibung werden für gleiche und gleich wirkende Teile dieselben Bezugsziffern verwendet.

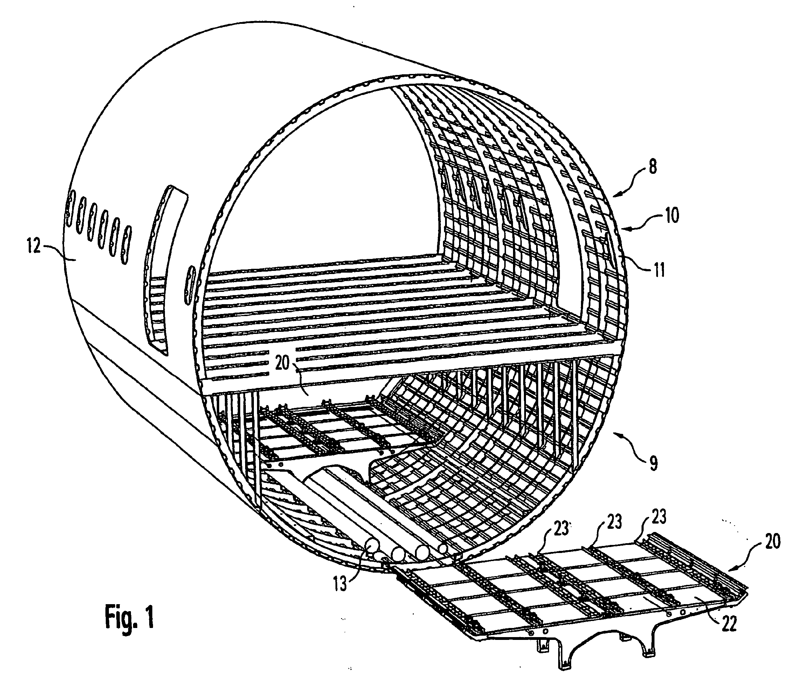

Gemäß Fig. 1 ist (bekanntlich) ein Flugzeugrumpf 10 in einen oberen Abschnitt 8 zur Verwendung als Passagierraum und einen unteren Abschnitt zur Bildung eines Frachtraums 9 unterteilt. Der Flugzeugrumpf 10 wird durch eine Außenhaut 12 gebildet, zu deren Verstärkung auf der Innenseite Spanten 11 angebracht sind. Die Außenhaut und die Spanten können aus Leichtmetall oder aber aus einem Verbundwerkstoff bestehen.

Im Frachtraum 9 werden Deckabschnitte 20 montiert, die zusammen ein Frachtdeck bilden. In der Bilge (unter den Deckabschnitten 20) sind Installationskanäle 13, Leitungen usw. angeordnet, die zur Versorgung sowohl des Passagierraums als auch des Frachtraums mit Fluiden (Luft, Wasser, Abwasser usw.) oder Strom (zur Energieversorgung, Datenübertragung usw.) dienen.

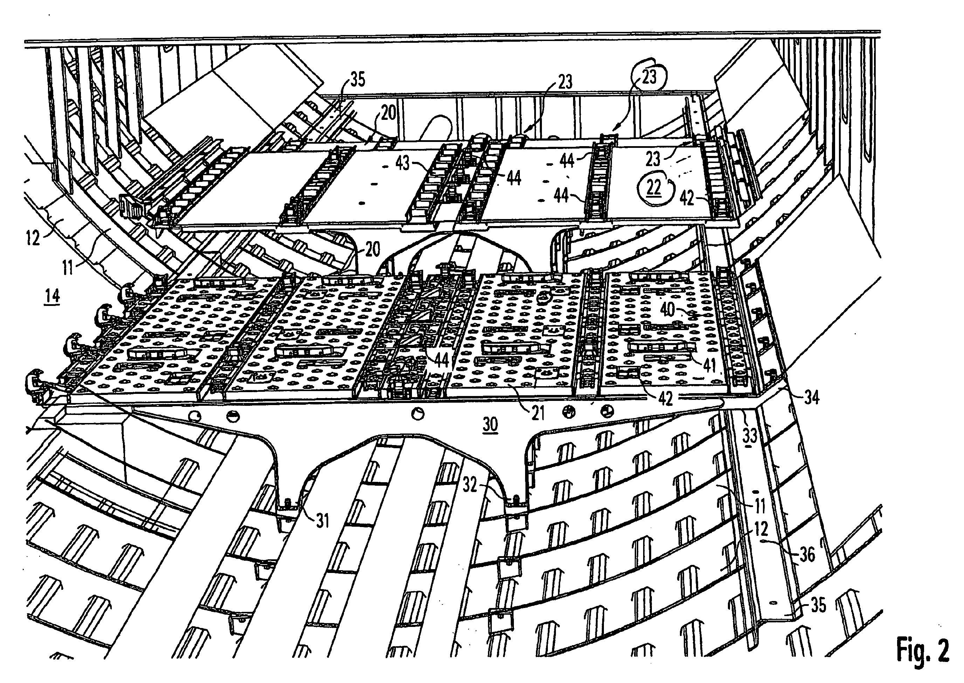

Wie aus Fig. 2 hervorgeht, sind die Deckabschnitte 20 einerseits aus flächigen Elementen, z.B. Bodenpaneelen 22 oder Kugelmatten 21 gebildet, die über parallel zur Flugzeuglängsachse verlaufende Profilelemente 23 miteinander verbunden sind. Diese flächigen Elemente 22, 23 sind vorzugsweise mit den Profilelementen 23 verschraubt oder vernietet, so dass eine über die gesamte Breite des Deckabschnittes 20 starre Struktur entsteht. In den Profilelementen 23 ist eine Vielzahl von Funktionselementen, z.B. PDUs 42 (Rollenantriebseinheiten), Transportrollen 43 oder Riegel 44 befestigt. Im Bereich einer Frachtraumtür 14, also im Bereich der Kugelmatten 21 sind darüber hinaus Kugelelemente 40, Führungselemente 41 sowie eine Vielzahl von weiteren PDUs 42 und Riegel 44 angebracht, wie dies an sich bekannt ist.

Zur Versteifung und Übertragung vertikaler Lasten der Deckabschnitte 20 sind unterhalb der flächigen Elemente 21, 22 und Profilelemente 23 Querträger 30 vorgesehen, die Füße 31, 32 und randseitige Auflagen 33 aufweisen. Die Füße 31, 32 der Querträger 30 sind an Spanten 11 befestigt, während die Auflager 33 auf Längsprofilen 35 aufliegen, die entlang einer außenliegenden Zone des Flugzeugrumpfes an den Spanten 11 befestigt sind. Weiterhin weisen die Querträger 30 außenseitige Kragen 34 auf, an denen weitere Führungselemente für aufzunehmende Container befestigt sind.

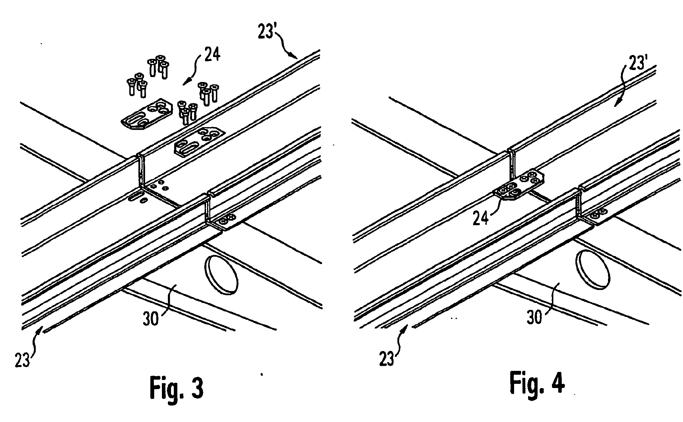

Die Deckabschnitte 20 werden nach dem Einbau im Laderaum über die Profilelemente 23 miteinander verbunden, wie dies in den Fig. 3 und 4 gezeigt ist. Hierfür vorgesehene Verbindungselemente 24 weisen Langlöcher auf, so dass zwei aneinander gekoppelte Deckabschnitte 20 jeweils gegeneinander in Richtung der Flugzeuglängsachse in gewissen Maßen verschiebbar sind.

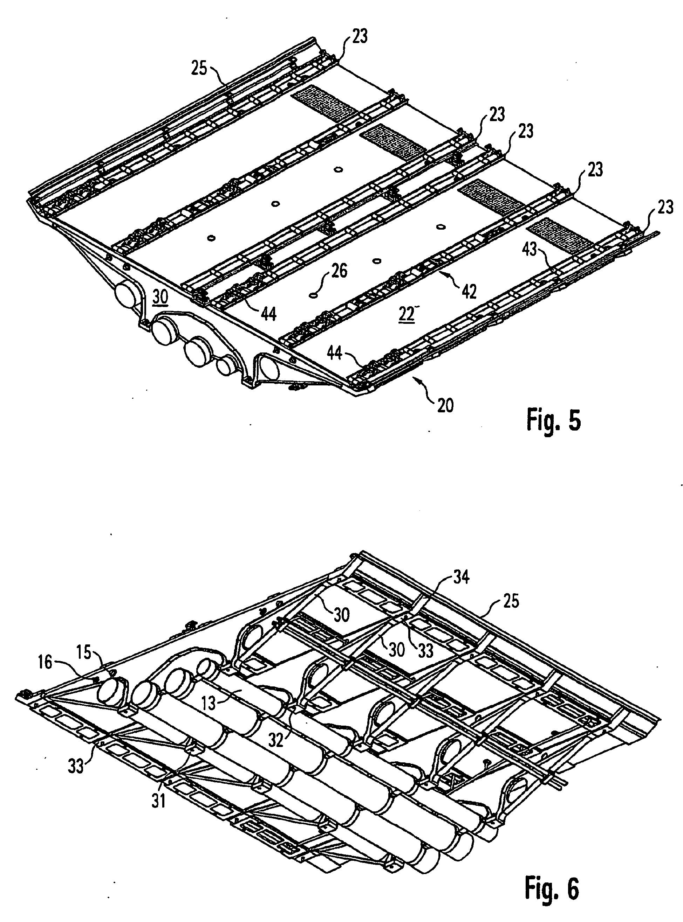

Die in den Fig. 5 und 6 gezeigten Deckabschnitte 20 bilden kompakte Module, die einerseits aus den über die Profilelemente 23 miteinander verbundenen flächigen Abschnitten 21 bzw. 22 und andererseits den Querträgern 30 bestehen. Darüber hinaus können diese Module abschnittsweise mit den Installationskanälen 13 sowie Drainageleitungen 16 (zum Entwässern des Frachtdecks) oder auch mit elektrischen Leitungen versehen sein, die über Verbindungsstecker 15 zwischen den Modulen miteinander verbindbar sind.

Die so gebildeten modulförmigen Deckabschnitte sind nun aufgrund der starren Verbindung zwischen den flächigen Abschnitten 21, 22 und den Profilelementen 23 derart gegenüber Scherkräften steif ausgebildet, dass beispielsweise über Riegel 44 in der Mitte eines Deckabschnitts (siehe Fig. 5) eingetragene Längskräfte nach außen, in Richtung zu Randprofilen 25 bzw. den nahe diesen vorgesehenen Profilelementen 23 übertragen werden. Von dort werden diese Längskräfte - wie dies weiter unten näher beschrieben wird - auf die Flugzeughaut übertragen.

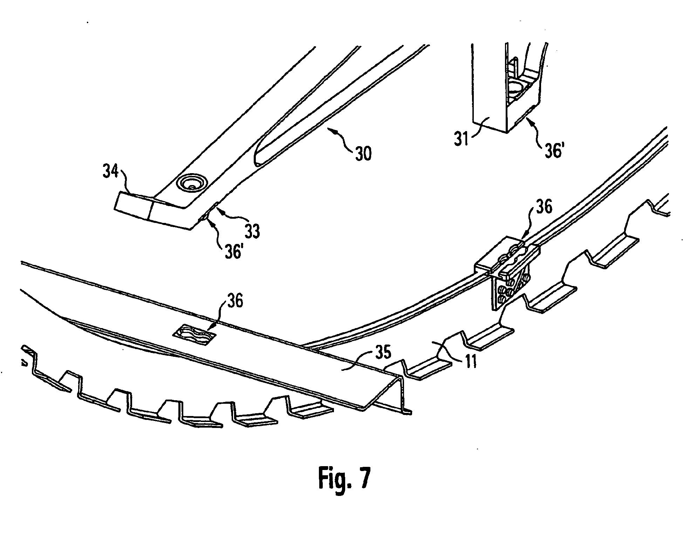

In Fig. 7 ist gezeigt, wie bei der Montage der Deckabschnitte oder Module im Frachtraum die Querträger 30 mit den Spanten 11 bzw. den Längsprofilen 35 verbunden werden. Hierzu sind einerseits an den Spanten 11 und den Längsprofilen 35 Befestigungselemente 36 vorgesehen, wie sie beispielsweise zur Befestigung von Flugzeugsitzen bekannt und erprobt sind. Andererseits sind an den Füßen 31 bzw. den Auflagern 33 der Querträger 30 entsprechende Gegen-Befestigungselemente 36' vorgesehen. Dies bedeutet, dass bei der Montage eines Deckabschnitts bzw. Modules im Frachtraum das Modul lediglich in den Frachtraum hineingehoben und dort mittels der Befestigungselemente 36, 36' fixiert werden muss. Das Fixieren der Querträger 30 an den Längsprofilen 35 kann von oben geschehen während zum Fixieren der Füße 31 an den Spanten 11 entweder Zugangsöffnungen 26 (siehe Fig. 5) in den Bodenpaneelen 22 oder den Kugelmatten 21 vorgesehen sind oder an den wichtigen Stellen diese Elemente während der Montage noch nicht fest mit den Profilelementen verbunden sind.

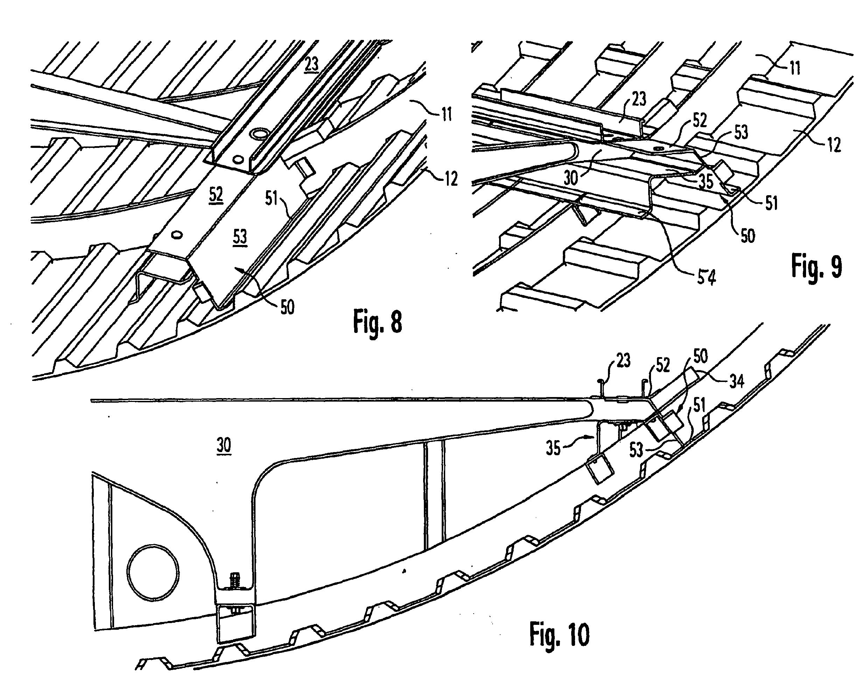

Zur Überleitung der Längskräfte von den Deckabschnitten 20 zur Außenhaut 12 des Flugzeugrumpfes 10 sind nun Zwischenelemente 50 vorgesehen, die nachfolgend anhand der Fig. 8-10 näher erläutert werden. Diese Zwischenelemente 50 weisen einerseits ein Außenkoppelstück 51, z.B. einen bandförmigen Bereich auf, der an der Außenhaut 12 zwischen zwei Spanten 11 z.B. durch Kleben oder Nieten starr befestigt ist. Weiterhin weist das Zwischenelement 50 ein Innenkoppelstück 52 auf, welches zugfest (in Richtung der Flugzeuglängsachse) mit dem randseitigen Profilelement 23 eines Deckabschnittes 20 verbunden ist. Das zwischen dem Innenkoppelstück 52 und dem Außenkoppelstück 51 vorgesehene Verbindungsstück 53 ist wiederum gegenüber Scherkräften steif, gegenüber Biegekräften jedoch relativ nachgiebig, so dass Kräfte in Richtung der Profilelemente 23, also in Längsrichtung des Flugzeugrumpfes 10 von den Profilelementen 23 über die Zwischenelemente 50 auf die Außenhaut 12 übertragen werden, während hierzu senkrechte Kräfte, also nach unten und nach außen wirkende Kräfte nur in ganz geringem Maße auf die Außenhaut 12 übertragen werden. Die Montage der Zwischenelemente 50 lässt sich dann besonders einfach gestalten, wenn diese Außenlappen 54 aufweisen, über welche die Zwischenelemente 50 an den Spanten 11 befestigt sind.

Die Zwischenelemente 50 sind nun sehr kurz im Verhältnis zur Gesamtlänge (in Flugzeuglängsrichtung) der Deckabschnitte 20 ausgebildet und im hier gezeigten Ausführungsbeispiel an nur jeweils einem Ende eines außenseitigen Profilelementes 23 eines Deckabschnitts 20 vorgesehen. Auf diese Weise wird sichergestellt, dass bei unterschiedlichen Materialdehnungen z.B. durch Temperaturunterschiede und unterschiedliche Ausdehnungskoeffizienten bei verschiedenen Materialien von Außenhaut 12 und Deckabschnitten 20 keine Spannungen zwischen der Außenhaut und den Deckabschnitten 20 auftreten können. In Flugzeuglängsrichtung ist somit das eine Ende eines jeden Deckabschnittes 20 am Flugzeugrumpf 10 fixiert während sein anderes Ende in Längsrichtung des Flugzeugs schwimmend gelagert ist. Lediglich zur Flugzeuglängsachse senkrechte Kräfte werden über die gesamte Länge der Deckabschnitte 20 in den Flugzeugrumpf 10 abgeleitet.

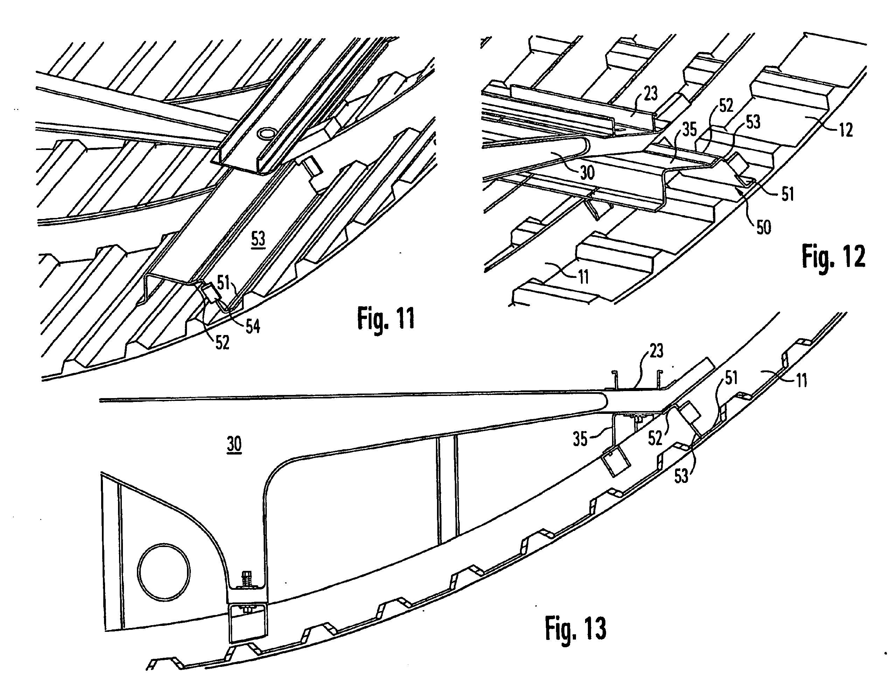

Die in den Fig. 11 - 13 gezeigte Ausführungsform der Erfindung unterscheidet sich dadurch von der nach den Fig. 8 -10, dass die Zwischenelemente 50 an die Längsprofile 35 angekoppelt sind, auf denen die Deckabschnitte 20 mit den Auflagern 33 ihrer Querträger 30 sitzen, auf welchen wiederum die Profilelemente 23 montiert sind. Bei dieser Anordnung werden die Längskräfte somit nicht direkt in die Zwischenelemente 50 sondern über Endabschnitte der Querträger 30 und Abschnitte der Längsprofile 35 auf die Zwischenelemente 50 und damit auf die Außenhaut 12 übertragen. Funktionell stellt dies allerdings keinen Unterschied zur Ausführungsform nach den Fig. 8 - 10 dar, da auch bei dieser Ausführungsform über die gesamte Breite der Deckabschnitte 20 aufgebrachte Längskräfte nach außen in die dort angebrachten äußersten Profilelemente 23 geleitet und von diesen (im Wesentlichen punktförmig) abgenommen und über die Zwischenelemente 50 auf die Außenhaut 12 übertragen werden. Auch hier sind somit die Querträger 30 nicht direkt an der Übertragung der Längskräfte beteiligt und können somit gegenüber derartigen Kräften nachgiebig bzw. schwach ausgebildet sein.

Nachfolgend wird eine weitere Anbringungsart der Querträger 30 bzw. Längsprofile 35 an der Außenhaut erläutert. An dieser Stelle sei betont, dass die in der vorliegenden Beschreibung und in den Zeichnungen gezeigte Außenhaut auch "kompakt", z.B. in Sandwich Bauweise derart ausgeführt sein kann, dass man die Spanten 11 bzw. die in den Zeichnungen gezeigten (üblichen) Längsversteifungen der Außenhaut 12 zumindest von außen nicht mehr erkennen kann (falls sie als Strukturen überhaupt vorhanden sind), da sich dann eine auch innen "glatte" Außenhaut ergibt.

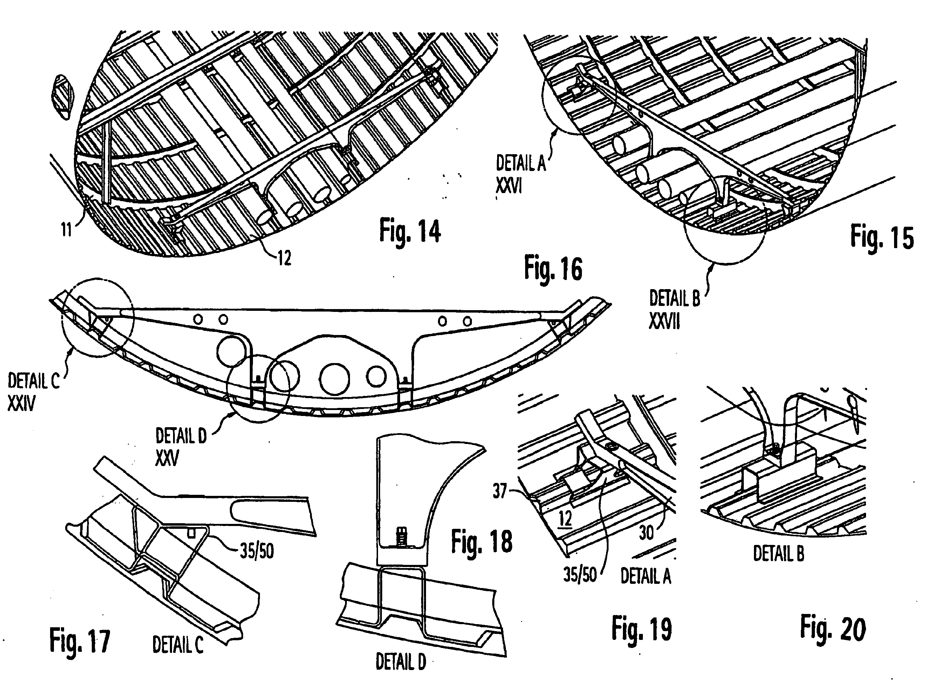

Die in den Fig. 14 - 20 gezeigte Ausführungsform zeichnet sich dadurch aus, dass die Längsprofile 35 bzw. Abschnitte hiervon, die somit als Zwischenelemente 50 dienen, jeweils eine Längsversteifung 37 überspannen, um dann mit der Außenhaut 12 verbunden zu werden. Auch hier können die Längsträger 35 bei entsprechender Formgebung die gesamte Länge des Flugzeugs durchspannen oder aber als Kurzabschnitte (wie in den Abbildungen gezeigt) ausgebildet sein.

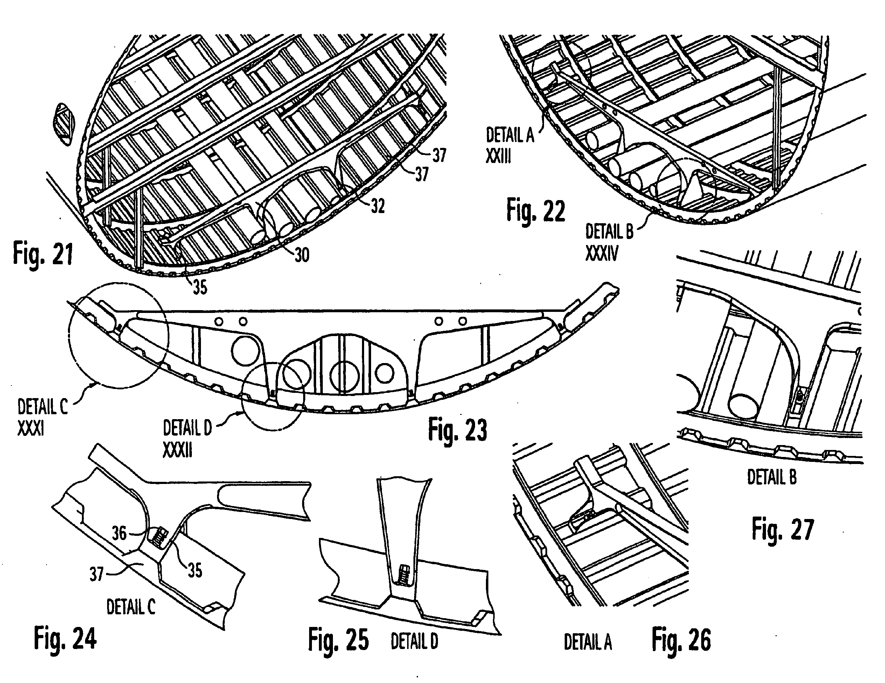

Die in den Fig. 21 - 27 gezeigte Ausführungsform der Erfindung zeichnet sich dadurch aus, dass das Längsprofil 35 als "Schuh" ausgebildet ist, der direkt am Querträger 30 befestigt bzw. einstückig mit diesem ausgeformt ist. Dieser "Schuh" ist auf der Längsversteifung 37 - wie in den Fig. 24 - 27 besonders gut sichtbar - über die Befestigungselemente 36 befestigt. Wie in den Abbildungen gezeigt gilt dies auch für die Füße 32 des Querträgers 30.

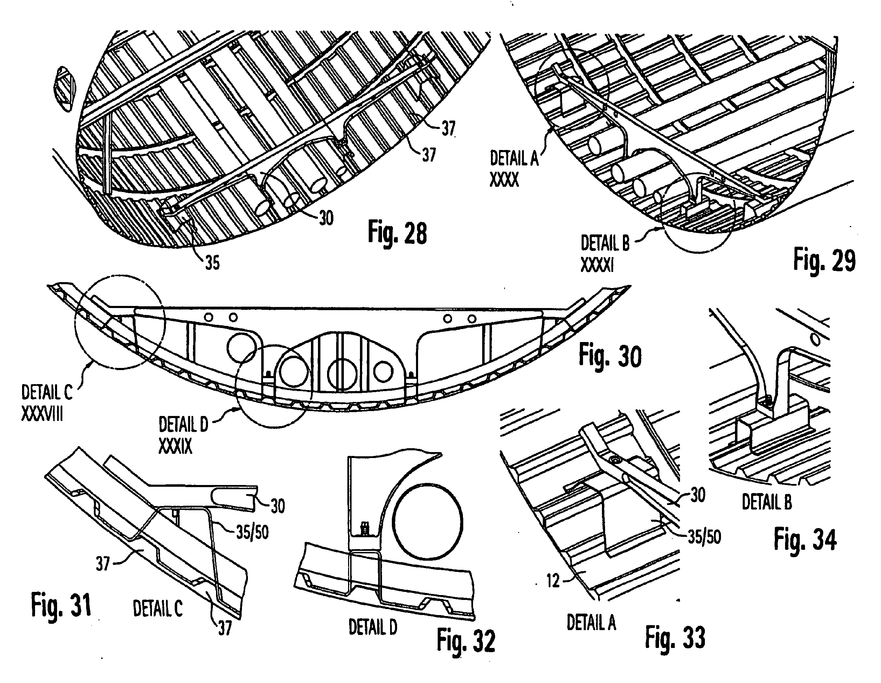

Bei der in den Fig. 28 - 34 gezeigten Ausführungsform der Erfindung sind die Längsprofile 35 insgesamt zwei Längsversteifungen 32 überspannend ausgebildet. Die Längsprofile 35 können hierbei entweder über die gesamte Länge des Flugzeuginnenraums geführt oder aber nur als kurze Abschnitte (wie in den Fig. 28 und 29 ersichtlich) als kurze, schuhförmige Abschnitte ausgebildet sein. Sie stellen dann sozusagen Zwischenelemente 50 dar, durch welche Längskräfte direkt auf die Außenhaut 12 abgeleitet werden.

An dieser Stelle sei nochmals betont, dass ein wesentlicher Punkt darin liegt, dass die Längskräfte über den gesamten Bodenbereich eingeleitet und (statisch bestimmt) an Endecken der Bodenmodule bzw. an Enden der Querträger in die Außenhaut eingeleitet werden.

### Bezugszeichenliste

- 8: Oberer Abschnitt
- 9: Frachtraum
- 10: Flugzeugrumpf
- 11: Spanten
- 12: Außenhaut
- 13: Installationskanal
- 14: Frachtraumtür
- 15: 1-Stecker
- 16: Drainageleitung
- 20: Deckabschnitt
- 21: Kugelmatte
- 22: Bodenpaneel
- 23: Rollenbahn/Profilelement
- 24: Verbindungselement
- 25: Randprofil
- 26: Zugangsöffnung
- 30: Querträger
- 31: Fuß
- 32: Fuß
- 33: Auflage
- 34: Kragen
- 35: Längsprofil
- 36, 36': Befestigungselement
- 37: Lingsversteifung
- 40: Kugelelement
- 41: Führungselement
- 42: PDU
- 43: Rolle
- 44: Riegel
- 50: Zwischenelement
- 51: Außenkoppelstück
- 52: Innenkoppelstück
- 53: Verbindungsstück
- 54: Außenlappen

## Patentansprüche

1. Frachtdeck zur Aufnahme von Ladung in einem Frachtraum (9) eines Flugzeuges, umfassend
eine Vielzahl von Kugelmatten (21), Bodenpaneelen (22) oder dergleichen flächigen Bodenelementen,
eine Vielzahl von Rollenbahnen oder dergleichen in Längsrichtung des Flugzeuges montierten Profilelementen (23) zur Aufnahme von Transportrollen (43), PDUs. (42), Riegelelementen (44) oder dergleichen Funktionselementen zum Bewegen und Fixieren der Ladung auf dem Frachtdeck,
wobei
die Bodenelemente (21, 22) mindestens abschnittsweise mit den Profilelementen (23) derart fest zu einem, den Frachtraum (9) über seine ganze Breite überspannenden Deckabschnitt (20) verbunden sind, dass auf den Deckabschnitt (20) insbesondere durch die Ladung aufgebrachte Längskräfte in Richtung einer Flugzeuglingsachse als Scherkräfte in Oberflächenrichtung des Frachtdecks wirkend zu Außenrändern des Deckabschnittes (20) übertragbar und von den Außenrändern auf eine Außenhaut (12) des Flugzeugs ableitbar sind, und wobei
das Frachtdeck in Richtung seiner Längsachse in mehrere Deckabschnitte (20) unterteilt ist, die voneinander in Bezug auf die Längskräfte entkoppelt sind.

2. Frachtdeck nach Anspruch 1,
**gekennzeichnet durch**
Zwischenelemente (50), die einerseits mit den Außenrändern des Deckabschnittes (20) und andererseits an der Außenhaut (12) zur Übertragung der Längskräfte verbunden sind.

3. Frachtdeck nach Anspruch 2,
**dadurch gekennzeichnet, dass**
die Zwischenelemente (50) zwischen Spanten (11) an der Außenhaut (12) befestigt sind.

4. Frachtdeck nach Anspruch 2,
**dadurch gekennzeichnet, dass**
die Zwischenelemente (50) eine derart kraftrichtungsabhängige Steifigkeit aufweisen, dass Längskräfte stärker als Kräfte in anderen Richtungen übertragen werden.

5. Frachtdeck nach einem der vorhergehenden Ansprüche, wobei die Deckabschnitte (20) Querträger (30) zur Bildung von tragkräftigen Modulen umfassen,
**dadurch gekennzeichnet, dass**
die Deckabschnitte (20) über die Querträger (30) an den Zwischenelementen (50) befestigt sind.

6. Frachtdeck nach einem der vorhergehenden Ansprüche,
**dadurch gekennzeichnet, dass**
die Längskräfte unter Zwischenschaltung mindestens von Endabschnitten von Querträgern (30) auf die Außenhaut (12) ableitbar sind.

7. Frachtdeck nach einem der vorhergehenden Ansprüche,
**dadurch gekennzeichnet, dass**
die Zwischenelemente (50) im Bereich von Endecken der Deckabschnitte (20) angebracht und kurz im Verhältnis zu einer Gesamtlänge der Deckabschnitte (20) ausgebildet sind.

8. Frachtdeck nach Anspruch 7,
**dadurch gekennzeichnet, dass**
an jedem Deckabschnitt (20) zwei Zwischenelemente (50) an den Endecken eines zur Längsrichtung senkrecht verlaufenden Randes des Deckabschnittes (20) angebracht sind.

9. Frachtdeck nach einem der vorhergehenden Ansprüche,
**dadurch gekennzeichnet, dass**
die Deckabschnitte (20) Querträger (30) zur Bildung von tragkräftigen Modulen umfassen.

10. Frachtdeck nach Anspruch 9,
**dadurch gekennzeichnet, dass**
die Querträger (30) Stützfüße (31, 32) zur Befestigung an Spanten (11) aufweisen.

11. Frachtdeck nach Anspruch 9,
**dadurch gekennzeichnet, dass**
jeder Deckabschnitt (20) einen Querträger (30) aufweist, dessen Enden zur Übertragung von Längskräften mit der Außenhaut (12) verbunden sind.

12. Frachtdeck nach einem der vorhergehenden Ansprüche,
**dadurch gekennzeichnet, dass**
die Deckabschnitte (20) randseitig auf Längsträgern (35) zum Ableiten von Kräften senkrecht zur Flugzeuglängsachse befestigt sind.

13. Frachtdeck nach einem Anspruch 12,
**dadurch gekennzeichnet, dass**
die Längsträger (35) an Spanten (11) des Flugzeugs befestigt sind.

14. Frachtdeck nach einem Anspruch 9,
**dadurch gekennzeichnet, dass**
die Module über Schnellverschlüsse (36, 36') im Flugzeug befestigbar sind.

## Claims

1. Cargo deck to accommodate a load in a cargo hold (9) of an aircraft, comprising
a plurality of ball mats (21), floor panels (22) or similar flat floor elements,
a plurality of roller conveyors or similar sectional elements (23) mounted in a longitudinal direction of the aircraft to accommodate transport rollers (43), PDUs (42), latching elements (44) or similar functional elements for moving and fixing the load on the cargo deck,
wherein
the floor elements (21, 22) are securely connected, at least in sections, with the sectional elements (23) to a deck section (20) spanning the cargo hold (9) over its entire width, in such a way that longitudinal forces applied to the deck section (20), in particular by the load, and acting in the direction of a longitudinal axis of the aircraft as shear forces in the surface direction of the cargo deck can be transferred to outer edges of the deck section (20) and diverted from the outer edges to an outer skin (12) of the aircraft, and wherein the cargo deck is subdivided into several deck sections (20) in the direction of its longitudinal axis, which sections are decoupled from each other in relation to the longitudinal forces.

2. Cargo deck according to Claim 1,
**characterised by**
intermediate elements (50), which are connected to outer edges of the deck section (20) on the one hand and to the outer skin (12) on the other for transferring the longitudinal forces.

3. Cargo deck according to Claim 2,
**characterised in that**
the intermediate elements (50) are attached between ribs (11) to the outer skin (12) .

4. Cargo deck according to Claim 2,
**characterised in that**
the intermediate elements (50) possess a rigidity so dependent on the direction of force that longitudinal forces are transferred more strongly than forces in other directions.

5. Cargo deck according to one of the previous claims, wherein the deck sections (20) comprise cross girders (30) to form load-bearing modules,
**characterised in that**
the deck sections (20) are attached by the cross girders (30) to the intermediate elements (50).

6. Cargo deck according to one of the previous claims,
**characterised in that**
the longitudinal-forces can be diverted to the outer skin (12) by interposing at least end sections of cross girders (30).

7. Cargo deck according to one of the previous claims
**characterised in that**
the intermediate elements (50) are accommodated in the area of end corners of the deck sections (20) and are short in construction in relation to an overall length of the deck sections (20).

8. Cargo deck according to Claim 7,
**characterised in that**
at each deck section (20) two intermediate elements (50) are accommodated on the end corners of an edge of the deck section (20) running perpendicularly to the longitudinal direction.

9. Cargo deck according to one of the previous claims,
**characterised in that**
the deck sections (20) comprise cross girders (30) to form load-bearing modules.

10. Cargo deck according to Claim 9,
**characterised in that**
the cross girders (30) have supporting feet (31, 32) for attaching to ribs (11).

11. Cargo deck according to Claim 9,
**characterised in that**
each deck section (20) has a cross girder (30), the end of which is connected to the outer skin (12) for transferring longitudinal forces.

12. Cargo deck according to one of the previous claims,
**characterised in that**
the deck sections (20) are attached at the edge to longitudinal girders (35) for diverting forces perpendicularly to the aircraft's longitudinal axis.

13. Cargo deck according to Claim 12,
**characterised in that**
the longitudinal girders (35) are attached to ribs (11) of the aircraft.

14. Cargo deck according to Claim 9,
**characterised in that**
the modules can be attached in the aircraft by means of quick-release fasteners (36, 36').

## Revendications

1. Plate-forme de transport de marchandises destinée à recevoir un chargement à l'intérieur d'un espace de transport de marchandises (9) d'un avion, comportant
une pluralité de tapis à billes (21), de panneaux de plancher (22) ou d'éléments de plancher plans similaires,
une pluralité de transporteurs à rouleaux ou d'éléments profilés (23) similaires montés dans la direction longitudinale de l'avion, destinés à recevoir les rouleaux de transport (43), des blocs d'entraînement (42), des éléments de verrouillage (44) ou d'autres éléments fonctionnels permettant de déplacer et de fixer le chargement sur la plate-forme de transport de marchandises,
dans laquelle
les éléments de plancher (21, 22) sont reliés au moins par section aux éléments profilés (23) fermement par rapport à une section de plate-forme (20) s'étendant sur toute la largeur de l'espace de transport de marchandises (9), de sorte que les forces longitudinales appliquées sur la section de plate-forme (20) en particulier par le chargement peuvent être transférées en direction d'un axe longitudinal de l'avion sous la forme de forces de cisaillement dans la direction superficielle de la plate-forme de transport de marchandises en agissant sur les bords externes de la section de plate-forme (20), et peuvent être déviées des bords externes sur une enveloppe externe (12) de l'avion, et dans laquelle la plate-forme de transport de marchandises est subdivisée, dans la direction de son axe longitudinal, en plusieurs sections de plate-forme (20), découplées des autres par rapport aux forces longitudinales.

2. Plate-forme de transport de marchandises selon la revendication 1, **caractérisée par** des éléments intermédiaires (50), qui sont reliés d'une part aux bords externes de la section de plate-forme (20) et d'autre part à l'enveloppe externe (12) afin de transmettre les forces longitudinales.

3. Plate-forme de transport de marchandises selon la revendication 2, **caractérisée en ce que** les éléments intermédiaires (50) sont fixés entre des membrures (11) sur l'enveloppe externe (12).

4. Plate-forme de transport de marchandises selon la revendication 2, **caractérisée en ce que** les éléments intermédiaires (50) présentent une résistance dépendant de la direction des forces de sorte que les forces longitudinales sont mieux transmises que les forces dans les autres directions.

5. Plate-forme de transport de marchandises selon l'une quelconque des revendications précédentes, dans laquelle les sections de plate-forme (20) comportent des entretoises transversales (30) permettant de former des modules à forces portantes, **caractérisée en ce que** les sections de plate-forme (20) sont fixées par l'intermédiaire des entretoises transversales (30) aux éléments intermédiaires (50).

6. Plate-forme de transport de marchandises selon l'une quelconque des revendications précédentes, **caractérisée en ce que** les forces longitudinales peuvent être déviées des entretoises transversales (30) sur l'enveloppe externe (12) en intercalant au moins des sections d'extrémité.

7. Plate-forme de transport de marchandises selon l'une quelconque des revendications précédentes, **caractérisée en ce que** les éléments intermédiaires (50) sont apposés dans la zone des angles d'extrémité des sections de plate-forme (20) et sont configurés de manière à être courts par rapport à une longueur globale des sections de plate-forme (20).

8. Plate-forme de transport de marchandises selon la revendication 7, **caractérisée en ce que**, sur chaque section de plate-forme (20), sont apposés deux éléments intermédiaires (50) au niveau des angles d'extrémité d'un bord perpendiculaire à la direction longitudinale de la section de plate-forme (20).

9. Plate-forme de transport de marchandises selon l'une quelconque des revendications précédentes, **caractérisée en ce que** les sections de plate-forme (20) comportent des entretoises transversales (30) permettant de former des modules à forces portantes.

10. Plate-forme de transport de marchandises selon la revendication 9, **caractérisée en ce que** les entretoises transversales (30) présentent des pieds d'appui (31, 32) pour la fixation sur des membrures (11).

11. Plate-forme de transport de marchandises selon la revendication 9, **caractérisée en ce que** chaque section de plate-forme (20) présente une entretoise transversale (30), dont les extrémités sont reliées à l'enveloppe externe (12) afin de transmettre les forces longitudinales.

12. Plate-forme de transport de marchandises selon l'une quelconque des revendications précédentes, **caractérisée en ce que** les sections de plate-forme (20) sont fixées sur les bords sur des entretoises longitudinales (35) afin de dévier les forces perpendiculairement à l'axe longitudinal de l'avion.

13. Plate-forme de transport de marchandises selon la revendication 12, **caractérisée en ce que** les entretoises longitudinales (35) sont fixées sur des membrures (11) de l'avion.

14. Plate-forme de transport de marchandises selon la revendication 9, **caractérisée en ce que** les modules peuvent être fixés par l'intermédiaire de raccords rapides (36, 36') dans l'avion.
